# DEMANDE DE BREVET EUROPEEN

(11) **EP 4 216 233 A2**
(43) Date de publication de la demande: **26.07.2023**
(21) Numéro de dépôt: 23151912.5
(22) Date de dépôt: 17.01.2023
(51) Int. Cl.: G21C 1/08, G21C 15/18

(54) **RÉACTEUR NUCLÉAIRE À EAU LÉGÈRE, NOTAMMENT À EAU PRESSURISÉE OU À EAU BOUILLANTE, À SOURCE FROIDE AU SOL ET INTÉGRANT UN SYSTÈME AUTONOME D'ÉVACUATION DE LA PUISSANCE RÉSIDUELLE**

(30) Priorité: 19.01.2022 FR 2200436
(71) Demandeur: Commissariat à l'énergie atomique et aux énergies alternatives, 75015 Paris (FR)
(72) Inventeur: LHERMET, GUILLAUME, 38054 GRENOBLE CEDEX 09 (FR); CANEY, Nadia, 38054 GRENOBLE CEDEX 09 (FR); MORIN, Franck, 13115 SAINT PAUL LEZ DURANCE (FR); TAUVERON, Nicolas, 38054 GRENOBLE CEDEX 09 (FR)
(74) Mandataire: Cabinet Nony

(57) **Abrégé**

Réacteur nucléaire à eau légère (REL), notamment à eau pressurisée (REP) ou à eau bouillante (REB), à source froide au sol et intégrant un système autonome d'évacuation de la puissance résiduelle (EPUR).

L'invention consiste essentiellement à implanter une machine ORC et une réserve d'eau supplémentaire, distincte de la piscine, l'énergie stockée dans la piscine étant la source chaude pour l'évaporateur de l'ORC, la réserve d'eau supplémentaire alimentant directement le condenseur de l'ORC par une pompe dédiée pour constituer la source froide au condenseur de l'ORC.

## Description

### Domaine technique

La présente invention concerne le domaine des réacteurs nucléaires, notamment à eau pressurisée et à eau bouillante.

Plus particulièrement, l'invention a trait à une amélioration de la fonction d'évacuation de la puissance résiduelle de ces réacteurs nucléaires, en situation accidentelle. Elle vise à intégrer un système autonome d'évacuation de la puissance résiduelle (EPUR), dans l'architecture de systèmes de sauvegarde de réacteurs à eau légère (REL) avancés.

L'invention a ainsi pour objectif de pallier un inconvénient majeur des condenseurs passifs de sûreté, ou de condenseurs muraux passifs selon l'état de l'art, qui réside dans la nécessité de disposer de volumes d'eau très importants en hauteur, ce qui alourdit et complexifie le génie civil d'une installation nucléaire, qui est une forte contrainte, notamment vis-à-vis de la problématique du séisme et augmente le coût.

Le deuxième avantage de l'invention consiste en l'obtention de meilleures performances globales de ce type de système du fait de la convection forcée du circuit contenant le condenseur de sûreté, avec également un échangeur plus compact du fait de meilleures performances d'échange thermique, et donc un volume global du système plus réduit.

On rappelle ici que la puissance résiduelle d'un réacteur nucléaire (« decay heat » en anglais) est la chaleur produite par le coeur postérieurement à l'arrêt de la réaction nucléaire en chaîne et constituée par l'énergie de désintégration des produits de fission.

Bien que décrite en référence à un réacteur nucléaire à eau pressurisée, l'invention s'applique à un réacteur nucléaire à eau bouillante, ou tout réacteur nucléaire à eau légère (REL) dont les moyens de sûreté d'évacuation de puissance résiduelle, tels qu'actuellement envisagés, nécessitent de disposer de grandes quantité d'eau en hauteur comme source froide.

### Technique antérieure

Un réacteur nucléaire à eau pressurisée (REP) comprend trois cycles (circuits fluidiques) dont le principe général de fonctionnement normal est le suivant.

L'eau sous haute pression d'un circuit primaire, prélève l'énergie fournie, sous forme de chaleur, par la fission des noyaux d'uranium et le cas échéant de plutonium, dans le coeur du réacteur.

Ensuite, cette eau sous haute pression et haute température, typiquement 155 bars et 300 °C, entre dans un générateur de vapeur (GV) et transmet son énergie à un circuit secondaire, lui aussi utilisant de l'eau sous pression comme fluide caloporteur. Cette eau sous forme de vapeur, à haute pression, typiquement à environ 70 bars, est ensuite détendue via un organe de détente transformant la variation d'enthalpie du fluide en travail mécanique puis électrique en présence d'une génératrice électrique.

L'eau du circuit secondaire, est ensuite condensée via un condenseur utilisant un troisième cycle, le cycle de refroidissement, comme source froide.

A la différence d'un REP, un réacteur à eau bouillante (REB) n'a pas de générateur de vapeur : il comprend un seul circuit d'eau et de vapeur produite après évaporation dans la cuve. L'eau de refroidissement est partiellement vaporisée dans le coeur. Cette eau circule sous pression, mais à une pression inférieure de celle d'un REP, typiquement de 70 à 80 bars.

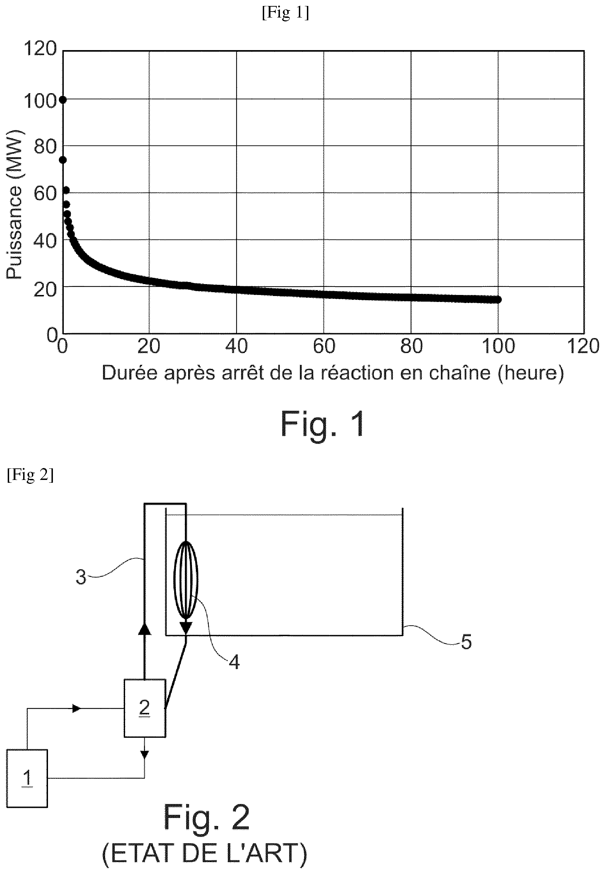

On pourra se reporter à la figure 2 de la publication [1] qui illustre la configuration générale d'un REB. L'eau extraite du condenseur est pompée à la pression de la cuve de réacteur via des pompes principales et admise dans celle-ci en périphérie du coeur. Elle est alors mélangée et réchauffée par un débit important d'eau saturée provenant de la séparation de l'émulsion vapeur-eau produite dans le coeur. En sortie du coeur le mélange eau-vapeur est séparé par gravité et par centrifugation. La vapeur produite est dirigée vers des collecteurs de vapeur et des turbines en aval, l'eau saturée est quant à elle recirculée pour être mélangée à l'eau plus froide. Le mélange d'eau descend le long de la paroi de cuve où il est repris au travers de boucles primaires externes à la cuve par des pompes primaires pour être dirigé dans le coeur et traverse ensuite le coeur où la chaleur produite est extraite provoquant un réchauffage à saturation et une évaporation.

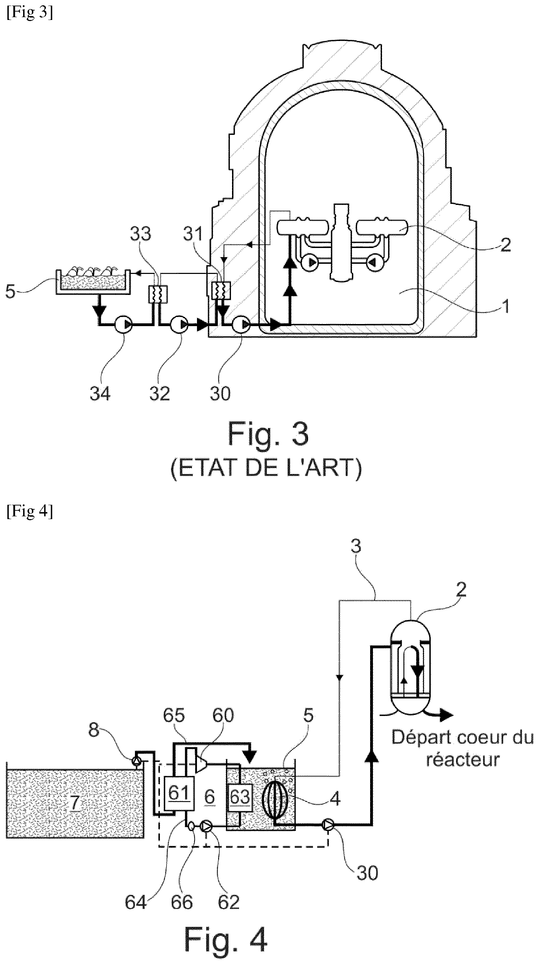

Un REB comprend des condenseurs de sûreté aussi appelés « Isolation Condenser » en langage anglo-saxon : ils constituent l'ultime recours pour le refroidissement de secours du coeur de réacteur. Une illustration schématique de l'agencement d'un «Isolation Condenser » est donnée à la figure 4 de la publication [1].

Cependant, bien que le fonctionnement des réacteurs à eau légères (REL) soit connu, maitrisé et fiable, l'histoire du nucléaire, avec notamment l'accident de Fukushima-Daiichi en 2011, a montré des faiblesses dans la gestion des centrales en cas de situations accidentelles extrêmes avec perte de tension prolongée du réseau électrique, aggravé par la perte également des moyens de production électrique internes et de la source froide.

Cette situation accidentelle provient notamment d'un défaut d'évacuation de la puissance résiduelle des réacteurs. Ces séquences accidentelles ont également été rencontrées pour les piscines de refroidissement des combustibles lors de l'accident de Fukushima en 2011.

Le phénomène de puissance résiduelle du coeur du réacteur se traduit de la manière suivante.

Lors de l'arrêt de la réaction nucléaire, les produits de fission en cours de désintégration continuent de produire de la chaleur jusqu'à atteindre un état stable.

Une seconde après l'arrêt du réacteur, cette chaleur représente 7% de la puissance thermique nominale du réacteur.

Ensuite, elle décroit avec le temps comme représenté sur la figure 1 issue de la publication [2].

Par exemple, 72 heures après l'arrêt du réacteur, elle représente toujours 0.5 % de la puissance thermique nominale. Il est donc primordial d'évacuer cette chaleur pour éviter tout risque de dégradation voire de fusion du combustible du coeur.

A titre d'exemple, le réacteur nucléaire REP connu sous la dénomination VVER TOI, présente une puissance électrique nominale de 1300 MWe et une puissance thermique nominale d'environ 3200 MWth. 72h après son arrêt, ce réacteur produit toujours une puissance thermique résiduelle d'environ 20 MWth.

De manière générale, pour l'évacuation de la puissance résiduelle, il est constamment recherché l'amélioration de la passivité et la diversification des systèmes pour garantir une meilleure fiabilité globale. L'objectif est de préserver l'intégrité des structures, à savoir les première (gaine des assemblages de combustible), deuxième barrière de confinement (circuit primaire), et troisième barrière (enceinte de confinement), et ce même en cas de manque de tension électrique généralisée sur une longue durée, qui correspond à un scénario de type Fukushima.

Plus particulièrement, depuis l'accident de Fukushima, beaucoup de recherches se focalisent sur des technologies d'évacuation de la puissance résiduelle sur des durées de plusieurs dizaines d'heures de façon passive.

Les exigences pour les nouvelles solutions portent avant tout une amélioration des performances et de leur fiabilité, ainsi qu'une autonomie de fonctionnement la plus grande possible, au moins 72 heures, avant toute intervention humaine et moyens matériels externes.

De manière plus critique, dans le cadre de l'invention, on considère une situation accidentelle avec interruption prolongée, typiquement de plusieurs jours, des alimentations électriques de toute origine, hors alimentation par batteries. Une telle situation est connue sous la dénomination anglo-saxonne « Station BlackOut » (acronyme SBO).

Un des moyens efficaces pour extraire la puissance résiduelle du coeur d'un REP en situation accidentelle sans moyens actifs nécessitant de l'électricité est de refroidir le coeur du réacteur via un système passif en transmettant ses calories soit à l'atmosphère via un échangeur à air, soit à une réserve (piscine) d'eau placée en hauteur, afin d'assurer une convection naturelle. On désigne un tel système sous la dénomination anglo-saxonne « passive residual heat removal » (PRHR).

Un PRHR présente globalement la même structure, que ce soit pour un refroidissement à air ou à eau : un circuit de refroidissement est agencé en sortie du générateur de vapeur (GV) du réacteur REP. Ainsi, au lieu d'envoyer la vapeur du circuit secondaire dans la turbine, la vapeur est envoyée dans un circuit parallèle où elle est refroidie et condensée soit par un condenseur à air, soit par un condenseur à eau.

Une première boucle de circulation naturelle permet de transférer les calories du coeur au GV, puis une deuxième boucle du GV vers un condenseur. Ainsi l'évacuation de la puissance résiduelle émise par le coeur du réacteur est assurée par l'intermédiaire du GV et de deux boucles de circulation naturelle qui sont donc passives.

Un exemple de condenseur à air en tant que PRHR déjà mis en oeuvre est celui du réacteur REP VVER TOI, dont les puissances thermiques et électriques ont été mentionnées ci-avant : le condenseur à air est sous la forme d'un échangeur monotube à ailettes circulaires conformé globalement en serpentin.

Les avantages d'un condenseur à air, comme celui-ci, résident dans le fait que l'air est une source froide inépuisable (en milieu ouvert) et naturellement présente. Cette technologie de condenseur à air est donc parfaitement indépendante de la durée de refroidissement, et il n'y a pas de phénomène de perte progressive de source froide.

L'inconvénient majeur de cette technologie est le volume des échangeurs à air. En effet, les coefficients d'échanges thermiques avec l'air étant faibles, les volumes et les surfaces nécessaires des échangeurs à air sont très importants, et les performances d'extraction thermiques sont très dépendantes des conditions météorologiques.

Par exemple, le PRHR du VVER TOI est dimensionné pour pourvoir retirer une puissance résiduelle égale à 2% de la puissance nominale thermique du réacteur, soit une puissance de 64 MWth. Pour atteindre une telle puissance, il a fallu installer un nombre de 16 unités d'une surface d'échange équivalente à plusieurs milliers de mètres carrés, situées en partie haute de l'installation nucléaire.

Comme mentionné ci-avant, l'évacuation de la puissance résiduelle nécessaire pour assurer le refroidissement du coeur d'un réacteur REP peut être assurée par un condenseur à eau, tel qu'illustré schématiquement en figure 2. Le coeur de réacteur 1 est relié à un générateur de vapeur 2 (GV) et l'évacuation de la puissance résiduelle est assurée par une boucle fermée de circulation naturelle passive 3 qui comprend le GV à un condenseur à eau 4 immergé dans une réserve d'eau ou piscine 5 placée en hauteur. Ainsi, cette boucle 3 permet de transmettre les calories du GV à la réserve d'eau 5. Lors de l'évacuation de la puissance résiduelle, cette réserve 5 monte en température jusqu'à ébullition de l'eau. L'eau s'évapore dans l'air à la pression atmosphérique avec une certaine cinétique.

Beaucoup de projets actuels utilisent l'eau comme source froide du PRHR, parmi lesquels on peut notamment citer :
- le projet AP-600 et AP-1000 de l'entreprise américaine Westinghouse ;
- le projet Hualong-1 des entreprises chinoises China General Nuclear Power Corporation (CGNPC) et la Compagnie nucléaire nationale chinoise (CNNC) ;
- le projet VVER1200 de l'entreprise russe ROSATOM, dans la version de condenseurs passifs de sûreté avec de l'eau en source froide.

Ce système d'évacuation de la puissance résiduelle présente des inconvénients majeurs.

Tout d'abord, la présence d'une source d'eau en hauteur complexifie et alourdit le génie civil du fait du besoin pour cette source froide de sûreté de garder une structure intacte en cas d'agression extrême de type séisme majoré ou collision par un avion.

De plus, par effet d'évaporation de l'eau, le temps de refroidissement du générateur de vapeur est directement lié au volume de la piscine : plus le volume d'eau est important, plus la durée de refroidissement est grande. A titre d'exemple, le réacteur HPR1000, d'une puissance thermique nominale de 3060 MW, comprend un PRHR dont le dimensionnement a été conçu pour permettre un refroidissement pendant 72h, ce qui implique un volume de piscine de 2300 m³ : [3].

Ainsi, la problématique de ce système réside dans un compromis nécessaire entre les contraintes de génie civil de la piscine et la durée de refroidissement assurée, typiquement 72h au minimum.

Une configuration intéressante de refroidissement d'urgence d'un générateur de vapeur (SG-ECS, acronyme anglo-saxon pour «Steam Generator Emergency Cooling System ») a déjà été proposée pour le projet de réacteur VVER TOI, notamment dans la publication [4]. Cette configuration est illustrée schématiquement à la figure 3. La piscine 5 est agencée au sol et le SG-ECS comprend en série trois circuits de refroidissement en boucle fermée:
- le premier comprend le générateur de vapeur 2, une première pompe 30 à eau (condensats vapeur du circuit secondaire), et un circuit de fluide d'un premier échangeur liquide/liquide 31 ;
- le deuxième comprend l'autre circuit de fluide du premier échangeur 31, une deuxième pompe 32 à eau et un circuit de fluide d'un deuxième échangeur liquide/liquide 33,
- le troisième comprend l'autre circuit de fluide du deuxième échangeur 33, une troisième pompe 34 à eau et la piscine 5.

Ce système de sûreté est efficace et autonome mais non passif : la circulation du fluide secondaire s'effectue de façon non gravitaire, depuis le générateur de vapeur 2, jusqu'à l'échangeur intermédiaire 31. Le transfert thermique entre le générateur de vapeur 2 et la source froide au sol s'effectue grâce aux pompes 30, 32, 34, et grâce aux échangeurs intermédiaires 31 et 33. Ainsi, ce système nécessite un apport énergétique extérieur assez important pour alimenter les trois pompes utilisées 30, 32, 34. Cet apport d'énergie pour alimenter électriquement les pompes 30, 32, 34 est réalisé par des moteurs à combustion interne de secours ou éventuellement des turbines à gaz.

Il existe exactement la même problématique pour l'évacuation de la puissance résiduelle d'un réacteur à eau bouillante (REB), ce qui a notamment conduit à la fusion du coeur de plusieurs tranches de la centrale de Fukushima Daiichi. Dans ce cas-là, ce n'est plus de la vapeur issue du circuit secondaire d'un générateur de vapeur (GV), mais directement de la vapeur issue de la cuve de réacteur qu'il faut alors refroidir et condenser pour évacuer la puissance résiduelle du coeur. La source froide nécessaire à la condensation de la vapeur primaire et son refroidissement se doivent également d'être en hauteur vis-à-vis du coeur du réacteur, et en volume important. Le dimensionnement de cette source froide, dans le cas des réacteurs à eau bouillante impliqués dans la catastrophe de Fukushima, ne permettait pas d'atteindre des autonomies de fonctionnement passif de 72 heures, comme il est souhaité majoritairement actuellement.

Suivant les procédures accidentelles mises en place, cela peut être également le système de refroidissement et de dépressurisation d'enceinte de confinement du réacteur à eau pressurisée ou bouillante, qui servira alors de moyen ultime d'évacuation de puissance résiduelle, notamment en cas de circuit primaire ouvert de façon volontaire (configuration dite de « gavé-ouvert » en scénario ultime) ou pas (situation de perte de réfrigérant primaire consécutive à un accident de type brèche primaire). On parle alors de source froide ultime celle dédiée à l'évacuation de la puissance résiduelle associée à un tel moyen de refroidissement.

Dans les deux situations précédemment citées, ces deux types de condenseurs passifs de sûreté ne peuvent fonctionner sur une longue période qu'à la condition où une source froide en eau de quantité suffisante permet de recueillir la puissance thermique nécessaire au refroidissement du coeur de réacteur.

De même que pour l'application concernant les réacteurs à eau pressurisée, cette source froide doit se situer en hauteur par rapport à l'ensemble formé par la cuve de réacteur et son enceinte de confinement, afin d'établir une circulation naturelle permettant l'évacuation de la puissance thermique depuis le coeur du réacteur ou le centre de l'enceinte de confinement.

De façon générale, la circulation naturelle d'un fluide monophasique ou diphasique est possible dès lors que la source froide augmentant la densité du fluide se situe à une altimétrie plus élevée que la source chaude abaissant la densité de ce même fluide. Dans le cas contraire, il y a stratification thermique et blocage de la circulation naturelle.

Ainsi, un dispositif autonome d'alimentation en source froide permettrait de considérablement allonger l'autonomie de fonctionnement de ce type de système de sûreté, par rapport à un fonctionnement de quelques heures à cause des contraintes de restrictions de volume d'eau en hauteur.

A titre d'illustration, la figure 2 de la publication [5] donne une idée des volumes nécessaires de source froide en hauteur dédiés au fonctionnement du système de refroidissement à confinement passif (« Passive Containment Cooling system » en anglais d'acronyme PCCS) d'une part dédiée à l'évacuation ultime, et du condenseur à eau (« Isolation Condenser ») d'autre part dédié à l'évacuation de sûreté.

Il a déjà été envisagé l'utilisation d'une machine à Cycle Organique de Rankine (ORC pour « Organic Rankine Cycle » en anglais) en complément d'un système de refroidissement d'un réacteur à eau pressurisée (REP) en situation accidentelle.

Comme expliqué précédemment, le problème des PRHR à eau réside dans la relation entre le volume de la piscine et le temps de refroidissement.

Aussi, une solution à cette problématique consiste à retirer une partie de l'énergie accumulée dans la piscine via un échangeur. Cet échangeur est ensuite utilisé comme évaporateur d'un ORC. Le condenseur du circuit ORC est un condenseur à air (aérocondenseur).

Cette solution permet d'utiliser la puissance produite par la turbine de l'ORC par le couplage turbine-génératrice, pour alimenter la pompe de l'ORC, ce qui réalise un système autonome permettant d'évacuer une partie de la chaleur stockée dans la piscine.

Un tel circuit ORC permet donc de récupérer, une partie, de l'énergie stockée sous forme de chaleur dans la piscine, et de l'évacuer/valoriser dans un circuit dédié, et donc de limiter la quantité d'eau évaporée par la piscine, et ainsi de prolonger la durée de refroidissement par la piscine.

Ainsi, la demande de brevet WO2012/145406 a proposé une telle solution mais pour un domaine d'application différent. En effet, les calories apportées à la piscine proviennent de combustibles nucléaires usés produisant toujours de la chaleur. Ainsi, cette technologie, appliqué à un réacteur REP peut pallier certaines problématiques exposées précédemment. En effet, une partie de la calorie stockée dans la piscine peut être retirée par un circuit ORC, ce qui permet de rallonger le temps d'évacuation de la puissance résiduelle du coeur pour un volume de piscine donné.

Cependant, bien que permettant d'améliorer le rapport entre durée de refroidissement et volume de la piscine, l'efficacité de cette technologie est dépendante du volume des échangeurs qui permettent d'évacuer la puissance vers la source froide ultime (air). En effet, pour que ce système soit réellement fonctionnel sur toute la période de refroidissement d'un réacteur REL, il faudrait que la puissance extraite par l'échangeur du cycle de refroidissement de la piscine soit du même ordre de grandeur que la puissance échangée entre la piscine et le réacteur.

Or, comme explicité précédemment, dans le cas du réacteur VVER TOI, la puissance résiduelle du réacteur est de l'ordre de plusieurs dizaines de MW.

Ainsi, mettre en place un cycle ORC comme proposé par la demande précitée, retirant la totalité, ou au moins une grande partie, de la puissance échangée entre la piscine et le réacteur nécessiterait des volumes d'installation colossaux, spécialement pour l'échangeur à air final.

Autrement dit, bien que permettant d'extraire la puissance résiduelle du coeur du réacteur pour un temps donné plus important que sans un cycle ORC, le système proposé dans la demande de brevet WO2012/145406 reste d'utilisation réelle très limitée et réellement efficace pour des puissances résiduelles de la centaine de kW.

La demande de brevet WO2013/019589 propose une solution similaire, à savoir refroidir des combustibles nucléaires usés en les immergeant dans une réserve d'eau et utiliser les calories de cette réserve d'eau pour faire fonctionner un cycle ORC ou un cycle de Stirling. Cette demande de brevet propose en outre de rajouter un module thermoélectrique qui va venir utiliser la chaleur produite par les combustibles usés pour la transformer en électricité.

L'originalité de la solution selon WO2013/019589 réside dans l'utilisation de l'électricité produite par ces différents systèmes, en complément des calories soustraites à la piscine, en mettant en oeuvre deux pompes à eau, dont une qui dirige l'eau de la réserve (piscine) au niveau d'un ventilateur, placé en hauteur, pour la refroidir et l'autre qui pompe de l'eau d'une autre réserve d'eau pour pallier l'évaporation de l'eau de la piscine.

Ainsi grâce à ces pompes à eau, il n'y a plus de lien direct entre la durée de refroidissement et le volume de piscine puisqu'une pompe dédiée permet un apport d'eau constant à la piscine.

Cependant, la solution selon WO2013/019589 présente plusieurs inconvénients.

En premier lieu, les échangeurs de la source froide du cycle de Stirling ou de l'ORC sont des échangeurs à air, et donc comme expliqué précédemment, ces échangeurs peuvent être d'un volume très important et nécessairement situés en partie haute.

Par ailleurs, les échangeurs à air ont la caractéristique de dépendre fortement de la température extérieure et donc de sa variabilité. Pour assurer leur fiabilité il est donc nécessaire de que le système puisse s'adapter aux variations de température de la zone géographique de la centrale.

Il existe donc un besoin pour améliorer les systèmes d'évacuation de la puissance résiduelle (EPUR) des réacteurs nucléaires à eau légère (REL), notamment à pressurisée (REP) ou à eau bouillante (REB), nécessitant des dispositifs d'évacuation de puissance résiduelle sur des périodes longues, afin de pallier les inconvénients précités en utilisant une machine (cycle) ORC.

### Exposé de l'invention

Pour ce faire, l'invention concerne, sous l'un de ses aspects, un réacteur nucléaire à eau légère (REL), notamment un réacteur à eau pressurisée (REP) ou un réacteur à eau bouillante (REB), comprenant :
- un coeur de réacteur;
- un circuit de refroidissement comprenant un moyen d'échange thermique, relié en boucle fermée à un moyen de prélèvement de vapeur du circuit primaire ou secondaire du réacteur et une première pompe pour alimenter en eau le moyen du circuit primaire ou secondaire depuis le moyen d'échange thermique;
- un système d'évacuation d'au moins une partie de la puissance résiduelle du coeur réacteur, le système comprenant :
   une première réserve d'eau ou piscine, agencée au-dessous du générateur de vapeur, dans laquelle le moyen d'échange thermique est immergé de sorte que l'eau contenue dans cette dernière refroidisse la vapeur issue du moyen de prélèvement,
   une machine à cycle organique de Rankine (ORC) comprenant :
      - un expandeur,
      - un condenseur,
      - une deuxième pompe,
      - un évaporateur agencé en contact avec la piscine de sorte que cette dernière constitue la source chaude de l'ORC,
      - un circuit fluidique dans lequel circule en boucle fermée un fluide de travail, le circuit fluidique reliant l'expandeur au condenseur, le condenseur à la deuxième pompe, la deuxième pompe à l'évaporateur, et l'évaporateur à l'expandeur ;
   une deuxième réserve d'eau, distincte de la piscine, et une troisième pompe reliée à la deuxième réserve d'eau et au condenseur de l'ORC pour alimenter en eau ce dernier, en tant que source froide de l'ORC.

La première réserve d'eau ou piscine comporte un volume d'eau important, notamment supérieur ou égal à 50 m³ et/ou inférieur ou égal à 100 m³.

Pour un réacteur nucléaire à eau pressurisée (REP), selon un premier mode de réalisation, le réacteur REP comprend un circuit de refroidissement comprenant un générateur de vapeur et un condenseur à eau immergé dans la piscine et relié en boucle fermée au générateur de vapeur.

Pour un réacteur nucléaire à eau pressurisée (REP), selon un deuxième mode de réalisation, le moyen de prélèvement de la puissance résiduelle présente dans le circuit primaire est un échangeur liquide/liquide, et le moyen d'échange thermique est un échangeur à eau immergé dans la piscine, de sorte que l'eau contenue dans cette dernière refroidisse l'eau du circuit primaire circulant dans l'échangeur liquide/liquide.

Pour un réacteur nucléaire à eau bouillante (REB), selon un premier mode de réalisation, le réacteur REB comprend un circuit de refroidissement comprenant :
- un prélèvement de vapeur primaire sur la ligne d'alimentation à la turbine du réacteur;
- un condenseur à eau immergé dans la piscine et relié en boucle fermée au prélèvement de vapeur.

Pour un réacteur nucléaire à eau pressurisée (REP) ou un réacteur nucléaire à eau bouillante (REB), selon un autre mode de réalisation, le moyen d'évacuation de la puissance résiduelle issue du coeur du réacteur peut être un système de dépressurisation de la vapeur présente dans l'enceinte de confinement et le moyen d'échange thermique peut être un échangeur à eau immergé dans la piscine ou un prélèvement direct de l'eau de la piscine d'une part, et d'un condenseur en paroi de confinement en contact direct avec la vapeur présente dans l'enceinte de confinement du réacteur d'autre part.

Avantageusement, la première réserve d'eau ou piscine est agencée sur ou dans le sol.

Avantageusement encore, la deuxième réserve d'eau est agencée dans une partie plus basse que la piscine, avantageusement sur ou dans le sol.

L'évaporateur de l'ORC peut être immergé dans la piscine ou déporté de celle-ci.

De préférence, l'évaporateur immergé est un échangeur tubulaire ou un échangeur à plaques.

Selon un mode de réalisation avantageux, le réacteur comprend en outre un cycle frigorifique comprenant :
- un compresseur;
- un condenseur relié à la deuxième pompe pour alimenter en eau ce dernier;
- un organe de détente ;
- un évaporateur à air ;
- un circuit fluidique dans lequel circule en boucle fermée un fluide de travail, le circuit fluidique reliant le compresseur au condenseur, le condenseur à l'organe de détente, l'organe de détente à l'évaporateur à air, et l'évaporateur à air au compresseur.

Avantageusement, le condenseur du cycle frigorifique est le condenseur de l'ORC.

Avantageusement encore, le fluide de travail du cycle frigorifique est celui de l'ORC.

Selon une variante de réalisation avantageuse, l'arbre de l'expandeur ORC est accouplé à l'arbre du compresseur du cycle frigorifique.

De préférence, le réacteur comprend des batteries adaptées pour le démarrage électrique de la deuxième pompe destinée à alimenter en source froide le condenseur ORC, des composants électriques de l'ORC, et le cas échéant du cycle frigorifique. De préférence, le réacteur comprend des batteries destinées au fonctionnement de la première pompe afin d'assurer la fonction d'évacuation de la puissance résiduelle durant la période précédant la mise en route du cycle ORC.

Ainsi, l'invention met en oeuvre en premier lieu un système de condenseur de sûreté utilisant comme source froide, une réserve d'eau ou piscine dans laquelle le condenseur est immergé et qui est agencée au-dessous du coeur de réacteur, de préférence au sol.

Par « agencée au sol », il faut comprendre ici et dans le cadre de l'invention une piscine enterrée ou « hors sol » qui est en appui sur le sol.

Cette piscine permet d'évacuer la puissance résiduelle du coeur du réacteur.

Or, comme expliqué en préambule, cette architecture est dépendante du volume de la piscine: le temps de refroidissement de la piscine est proportionnel (ou directement lié) à son volume et donc est limité.

Pour pallier cela, l'invention consiste essentiellement à implanter une machine ORC et une réserve d'eau supplémentaire, distincte de la piscine, l'énergie stockée dans la piscine étant la source chaude pour l'évaporateur de l'ORC, la réserve d'eau supplémentaire alimentant directement le condenseur de l'ORC par une pompe dédiée pour constituer la source froide au condenseur de l'ORC.

Par-là, les pertes d'eau par évaporation de la piscine sont compensées en acheminant de l'eau depuis la réserve supplémentaire, avantageusement dans une partie basse, de préférence au niveau du sol.

Un avantage majeur d'agencer la source froide depuis le sol est la simplification très importante du génie civil dédié au supportage et à la protection de ce volume de source froide de sûreté en partie haute de l'installation nucléaire, et de la réduction de coût de construction et de maintenance, et des études de tenue au séisme qui en découlent.

Le fait d'avoir la piscine au sol permet de lui conférer un grand volume car il n'y a pas de génie civil conséquent à prévoir et donc d'avoir une source froide importante pour la machine ORC. En effet, le positionnement de la piscine au sol permet un approvisionnement en source froide direct sans avoir à mettre en oeuvre un système de pompage qui amène de l'eau en hauteur.

L'utilisation de la première pompe pour acheminer l'eau condensée secondaire depuis la piscine au sol, provoque une augmentation de la puissance électrique à produire à une configuration où la piscine serait en hauteur. Cependant, la présence de cette source froide conséquente au sol, couplée à une source chaude elle aussi conséquente, permet de produire des puissances électriques très largement suffisantes pour ces situations.

Bien que non passif au sens exact du terme de par la présence des pompes de circulation d'eau et de l'expandeur (turbine), le refroidissement secondaire de sûreté en cycle fermé selon l'invention présenté l'avantage majeur d'être nettement plus performant qu'un système passif utilisant un écoulement naturel diphasique depuis le générateur de vapeur (REP) ou la ligne prélèvement de la vapeur (REB).

De plus, le système selon l'invention peut facilement être réglable par un contrôle de la puissance de la première pompe, qui renvoie les condensats secondaires vers le générateur de vapeur (REP) ou les condensats primaires vers la cuve réacteur (REB). Cela permet ainsi à un exploitant d'une installation nucléaire qui intégrerait un système selon l'invention de pouvoir piloter le gradient de refroidissement par heure du réacteur, ce qui est souhaitable pour des phases incidentelles susceptibles de se reproduire plusieurs fois dans la vie de la tranche nucléaire, voire pour des phases de refroidissement normal du réacteur.

Le système d'évacuation de la puissance résiduelle selon l'invention se différencie des systèmes selon l'état de l'art, notamment par les aspects suivants :
- contrairement aux systèmes existants qui utilisent l'air comme source froide, l'eau conduite de la partie basse depuis la réserve d'eau supplémentaire sert de source froide au condenseur de l'ORC ;
- la possibilité d'avoir une source froide très conséquente du fait du positionnement possible de la piscine et de la réserve d'eau supplémentaire au sol ;
- cette eau amenée depuis la réserve d'eau supplémentaire peut avantageusement servir aussi de source froide au condenseur d'un cycle frigorifique qui a pour objectif de produire de la puissance de froid par exemple, pour refroidir l'expandeur de l'ORC et donc assurer une meilleure autonomie et fiabilité du système ou encore pour refroidir d'autres équipements de sûreté, par exemple une armoire électrique ou de contrôle, une salle de commande...

Un avantage majeur d'une configuration de système selon l'invention, par comparaison aux géométries des systèmes existants, est donc l'utilisation de l'eau acheminée pour alimenter la piscine en évaporation, comme source froide pour le condenseur du cycle ORC et avantageusement d'un cycle frigorifique.

Ainsi, une configuration d'un système selon l'invention permet la mise en oeuvre d'un échangeur à eau à plaques en tant qu'évaporateur de l'ORC, qui doit être certes déporté de la piscine mais dont le volume est bien plus faible que des condenseurs à air de puissance équivalente. A titre d'exemple indicatif, un échangeur à eau à plaques présente un coefficient d'échange par convection amélioré d'un facteur 50 à 100 par rapport à un condenseur dont le fluide est de l'air.

L'utilisation d'un échangeur à eau permet d'abaisser la pression de condensation du fluide ORC dans le cycle ORC et donc, le rendement est augmenté.

Le fait d'utiliser de l'eau pompée comme source froide du cycle ORC et avantageusement du cycle frigorifique, qui est combiné permet en outre d'augmenter grandement la fiabilité du système: la diminution des volumes des échangeurs les rend moins vulnérables aux agressions externes, qu'elles soient naturelles ou malveillantes.

De plus, les condenseurs à plaques eau/eau, sont des échangeurs très connus de l'état de l'art, possédant une grande fiabilité (critère essentiel dans le domaine du nucléaire).

Aussi, le fait que la source froide de l'ensemble des échangeurs de la source froide (cycle de refroidissement du réacteur, cycle ORC, cycle frigorifique) soit de l'eau, évite l'utilisation d'une source froide complémentaire, de l'air dans l'état de l'art.

Comme expliqué précédemment, un échangeur à air est extrêmement dépendant de la température de l'air ambiant. Ainsi, utiliser l'eau d'une réserve placée en partie basse, comme source froide du cycle ORC, permet d'être moins dépendant de la température extérieure et donc de ses variations.

De fait, avec l'invention, il n'y a plus de limitation de puissance à cause de la source froide du cycle. En effet, la taille de l'échangeur à eau et les conditions de température côté source froide ne sont pas aussi limitantes qu'avec un condenseur à air selon l'état de l'art, dont on va chercher à minimiser la taille, sans parler de la température de l'air évoquée ci-avant.

L'invention permet donc de produire une puissance électrique importante, et donc la possibilité de refroidir et de condenser de grandes quantité de vapeur secondaire d'un REP ou primaire d'un REB pour des volumes d'installation faibles.

L'ajout d'un cycle frigorifique au cycle ORC selon l'invention permet de refroidir l'expandeur du cycle ORC, ainsi que d'autres composants, par exemple de l'électronique de puissance à refroidir et donc d'augmenter l'autonomie et la fiabilité du système. Un condenseur unique peut être avantageusement commun au cycle ORC et au cycle frigorifique, ce qui est possible avec des flux de fluide de travail qui sont soit en série ou soit en parallèle fluidique.

Le surplus d'électricité par le cycle ORC selon l'invention peut couvrir non seulement les besoins décrits précédemment mais également d'autres besoins électriques de sûreté de l'installation, comme l'alimentation électrique de dispositifs de commande ou de mesure, de refroidissement, ...

Le système selon l'invention implique la mise en oeuvre de batteries nécessaires pour le démarrage du système. Ces batteries servent notamment au démarrage de la pompe dédiée au retour des condensats primaires ou secondaires vers le générateur de vapeur (REP) ou le prélèvement de vapeur (REB). L'énergie accumulée dans ces batteries peut être très limitée, des multiples groupes redondants permettent d'assurer une grande fiabilité.

Au final, un réacteur nucléaire avec un système selon l'invention présente de nombreux avantages parmi lesquels on peut citer :
- amélioration significative du système de refroidissement existant d'un réacteur nucléaire, notamment celui d'un REP comprenant un générateur de vapeur, un circuit en boucle fermée de convection naturelle et une piscine de refroidissement ;
- système fiable et autonome ;
- possibilité d'avoir une installation nucléaire avec des volumes faibles en partie haute, ce qui allège les contraintes de génie civil et de coût ;
- possibilité de piloter le gradient de refroidissement du réacteur en modifiant la vitesse de pompe de remontée des condensats secondaire de REP ou primaire de REB.

D'autres avantages et caractéristiques de l'invention ressortiront mieux à la lecture de la description détaillée d'exemples de mise en oeuvre de l'invention faite à titre illustratif et non limitatif en référence aux figures suivantes.

### Brève description des dessins

[Fig 1] la figure 1 illustre sous forme d'une courbe la décroissance temporelle de la puissance résiduelle d'un réacteur nucléaire selon l'état de l'art connu sous la désignation VVER TOI.
[Fig 2] la figure 2 est une vue schématique d'un système passif d'évacuation de la chaleur résiduelle d'un coeur de réacteur nucléaire de type REP selon l'état de l'art.
[Fig 3] la figure 3 est une vue schématique d'un réacteur nucléaire de type REP avec piscine à eau au sol et système passif et d'évacuation de la chaleur résiduelle d'un coeur de réacteur selon l'état de l'art.
[Fig 4] la figure 4 est une vue schématique d'un réacteur nucléaire de type REP avec piscine à eau au sol et système passif et d'évacuation de la chaleur résiduelle d'un coeur de réacteur selon l'invention.
[Fig 5] la figure 5 est une vue schématique illustrant un mode de réalisation de l'invention comprenant en outre un cycle frigorifique.
[Fig 6] la figure 6 est un diagramme entropique T-s du cycle ORC et du cycle frigorifique d'un système comme selon la figure 5.
[Fig 7] la figure 7 est une vue schématique illustrant une première variante d'un système selon l'invention.
[Fig 8] la figure 8 est une vue illustrant une deuxième variante d'un système selon l'invention.
[Fig 9] la figure 9 est une vue schématique illustrant un autre mode de réalisation selon l'invention avec système de dépressurisation de la vapeur présente dans l'enceinte de confinement d'un réacteur REB ou REP.
[Fig 10] la figure 10 est une vue schématique illustrant une première variante d'un moyen d'échange thermique selon l'invention pour un réacteur REB ou REP.
[Fig 11] la figure 11 est une vue schématique illustrant une première variante d'un moyen d'échange thermique selon l'invention pour un réacteur REB ou REP.

### Description détaillée

Dans l'ensemble de la présente demande, les termes « vertical », « inférieur », « supérieur», « bas », « haut », « dessous » et « dessus » sont à comprendre par référence par rapport à une piscine de refroidissement d'un réacteur nucléaire remplie d'eau, telle qu'elle est en configuration horizontale de fonctionnement et agencée au-sol, c'est-à-dire enterrée ou « hors sol » en appui contre le sol.

Les figures 1 à 3 ont déjà été détaillées en préambule, elles ne seront donc pas commentées ci-après.

Par soucis de clarté, un même élément selon l'invention et selon l'état de l'art et désignés par une même référence numérique dans l'ensemble des figures 1 à 8.

On précise que dans les figures 4 à 8 relatives à l'invention seule une partie du système de refroidissement d'un coeur de réacteur nucléaire REP est représentée, à savoir le générateur de vapeur relié en boucle fermée à un échangeur à eau immergé dans la piscine de refroidissement.

On précise également que les lignes en pointillés désignent les lignes d'alimentation électriques des différents composants électriques tandis que celles en traits pleins désignent les lignes fluidiques.

On a illustré à la figure 4 un système autonome d'évacuation d'au moins une partie à la fois de la puissance résiduelle d'un réacteur REP selon l'invention.

Le système comprend tout d'abord la piscine 5 de refroidissement agencée au sol, un condenseur à eau 4 immergé dans la piscine de sorte que l'eau contenue dans cette dernière refroidisse la vapeur issue du circuit secondaire du réacteur, et une première pompe 30 pour alimenter en eau le générateur de vapeur depuis le condenseur à eau.

Il comprend également une machine 6 à cycle organique de Rankine (ORC) comprenant :
- un expandeur 60;
- un condenseur 61,
- une deuxième pompe, dite pompe ORC, qui est une pompe à fluide de travail 62;
- un évaporateur 63 agencé relativement à la piscine 5 de sorte que cette dernière constitue la source chaude de l'ORC;
- un circuit fluidique 64 dans lequel circule en boucle fermée un fluide de travail.

Comme illustré, selon l'invention, le circuit fluidique 64 relie l'expandeur 60 au condenseur 61, le condenseur 61 à la pompe 62, la pompe 62 à l'évaporateur 63, et l'évaporateur 63 à l'expandeur 60.

Une deuxième réserve d'eau formant une piscine générale 7 contient l' ensemble de la source froide dédiée au refroidissement du réacteur, et alimente la piscine 5 dédiée au fonctionnement du cycle ORC et contenant le condenseur de sûreté 4 et l'évaporateur ORC 63.

L'eau issue de la piscine 7 sert de source froide au condenseur échangeur 61.

L'eau issue de la piscine 7 est légèrement réchauffée par le condenseur 61 avant d'être injectée dans la piscine 5 au moyen d'une troisième pompe qui est une pompe à eau 8. Cette pompe 8 alimente une ligne fluidique dédiée 65 pour pallier l'évaporation de la piscine 5 recevant la puissance résiduelle réacteur.

L'expandeur 60 peut être typiquement une turbine, un détenteur à spirales, à vis, à pistons, etc ...

Le condenseur 61 est typiquement un condenseur à plaques.

La pompe 62 est typiquement une pompe centrifuge, ou à membrane, à vis, etc ...

La machine 6 peut comprendre un ballon-tampon 66, c'est-à-dire une réserve de quantité de fluide de travail qui permet notamment un fonctionnement adéquat de l'ORC en régime variable. Tel qu'illustré à la figure 4, ce ballon-tampon 66 peut être agencé en amont de la pompe 62.

Dans le mode illustré à la figure 4, l'évaporateur 63 est un évaporateur tubulaire immergé à la verticale dans la piscine 5.

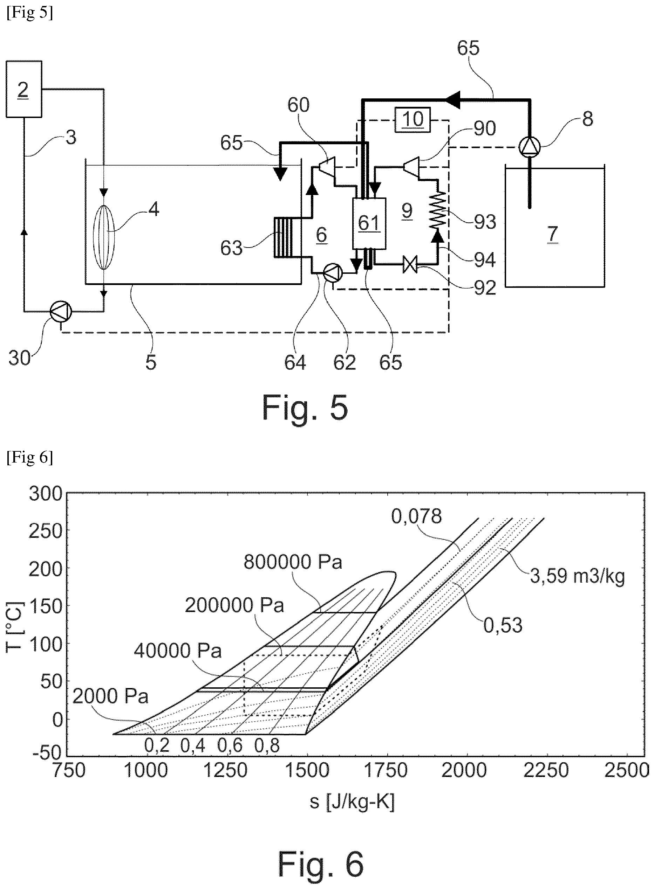

Dans le mode de réalisation avantageux de la figure 5, il est en outre prévu un cycle frigorifique 9 comprenant :
- un compresseur 90;
- un condenseur 61, qui est celui de l'ORC, relié à la pompe à eau 8 pour alimenter en eau ce dernier ;
- un organe de détente 92;
- un évaporateur à air 93,
- un circuit fluidique 94 dans lequel circule en boucle fermée un fluide de travail.

Le circuit fluidique 94 relie le compresseur 90 au condenseur 61, le condenseur de l'ORC 61 à l'organe de détente 92, l'organe de détente à l'évaporateur à air 93, et l'évaporateur à air 93 au compresseur 90.

L'organe de détente 92 peut être une vanne ou de préférence une turbine, un éjecteur, ...

A l'instar du cycle ORC 6, le cycle frigorifique 9 peut comprendre également un ballon-tampon formant une réserve de fluide de travail dans ce cycle.

Des batteries 10 peuvent être prévues pour le démarrage électrique des différentes pompes 30, 62, 8, des composants électriques de l'ORC et le cas échéant du cycle frigorifique 9. Plus précisément, les batteries peuvent servir dans un premier temps pour alimenter la pompe 30 du circuit de refroidissement, puis dans un second temps, quand la réserve d'eau 5 est en ébullition, pour permettre le démarrage de l'ORC, c'est-à-dire le démarrage de la pompe 62 et de la pompe de remplissage 8.

Un exemple de dimensionnement, suivant une situation accidentelle dans le cas d'un réacteur REP d'une puissance de 3200 MWth, est fourni ci-après.

Le fluide de travail du cycle ORC est un fluide organique dont la température d'évaporation est plus faible que celle de l'eau bouillante d'environ 100°C sous pression atmosphérique. On peut notamment citer le Novec649, le HFE7000, le HFE7100... De nombreux autres fluides organiques peuvent être envisagés, tels que les alcanes, HFC, HFO, HFCO, HFE, ainsi que quelques autres fluides (NH3, CO₂) et tous leurs mélanges.

Le fluide utilisé dans la simulation de dimensionnement est du HFE7100 et il est avantageusement utilisé à la fois dans le cycle ORC 6 et dans le cycle frigorifique 9.

Dans cet exemple, des capteurs de température ou de niveau d'eau de la piscine 5 permettent de détecter l'état de saturation complète de la piscine 5 et le début de perte de niveau liquide par ébullition. La valeur indiquée de 50m³ correspond à un délai typique de 5 minutes de fonctionnement d'un condenseur évacuant 60 MW depuis le GV. A ce moment-là, la pompe 8 injecte un débit correspondant exactement, par dimensionnement, au remplacement de l'eau évaporée dans la piscine 5, évaporation produite par les 60MW échangés.

La pompe 30 est réglée en débit pour produire les 60MW d'échange thermique du condenseur 4, et les pompes 8 et 30 sont ainsi reliées par la fonction de transfert de puissance du condenseur 4, sachant que l'ébullition d'un kilo d'eau de la piscine 5 requiert environ 2,25 MW de puissance thermique déposée par le condenseur 4.

Le dimensionnement relatif à la piscine 5 et réserve d'eau 7 est résumé dans le tableau 1 ci-dessous.

**[Tableau 1]**

| **Dimension** | **Valeur** |
|---|---|
| Volume total de la piscine 5 | 50 m³ |
| Réserve d'eau 7 | en fonction de l'autonomie maximale de fonctionnement autonome du réacteur |
| Différence de hauteur entre piscine 5 et le générateur de vapeur 2 | 30 m |

Les informations relatives au temps de fonctionnement de la piscine sont résumées dans le tableau 2 ci-dessous.

**[Tableau 2]**

| **Fonctionnement** | **Durée (min)** |
|---|---|
| Piscine 5 entre à saturation sous un régime de fonctionnement de 60MW de condenseur | T0 +5 |
| Démarrage de l'ORC | T0 +5 + quelques secondes |

Les débits sont donnés dans le tableau 3 suivant :

**[Tableau 3]**

| **Débit** | **Valeur (kg/s)** |
|---|---|
| Débit du fluide de travail de l'ORC | 3,5 |
| Débit d'eau pompé (source froide) | 30 |
| Débit du fluide de travail du cycle frigorifique dédié à l'ORC | 0,2 |

On indique maintenant la correspondance entre les débits des pompes 8 et 30.

Dans cet exemple de dimensionnement, le condenseur 61 sans sous refroidissement des condensats, est piloté en puissance à 60 MWTh par le contrôle commande de l'installation qui ordonne un refroidissement de réacteur de x degrés/h sous une pression vapeur GV de 60 bar.

Le débit de la pompe 30 est égal au rapport entre la puissance et la chaleur latente à saturation sous 60 bar, soit égal à 60 MW/1,57MJ/kg soit 38,2 kg/s. Soit un débit volumique de la pompe 30 de 180 m³/h.

En considérant une surpression de refoulement de pompe de 3 bar pour la remontée des condensats et les pertes de charge en circuit, cela donne une puissance hydraulique de 15kW, soit avec un rendement de pompe égal à 0,7, une puissance électrique d'alimentation de 22 kWe. La batterie associée au fonctionnement de la pompe 30 doit donc pouvoir alimenter 22kWe pendant au moins 5 minutes, avant que l'ORC ne prenne le relai.

Le débit de la pompe 8 associé à ce point de fonctionnement se déduit directement par la relation : le débit d'eau pompée est égal au rapport entre la puissance et la chaleur latente à pression atmosphérique, soit égal à 60MW/2.25MJ/kg, soit 27 kg/s. Le débit volumique associé de la pompe 8 est donc d'environ 100 m3/h. Cette pompe a besoin d'être alimentée par batterie pour le démarrage de l'ORC (approvisionnement en source froide).

Les températures externes sont données dans le tableau 4 suivant :

**[Tableau 4]**

| **Température** | **Valeur** (°C) |
|---|---|
| Température moyenne de la source chaude | 100 |
| Température de la source froide | 30 |
| Température de la source froide (sortie de l'ORC) | 34 |

Les pressions internes sont données dans le tableau 5 suivant :

**[Tableau 5]**

| **Pression** | **Valeur (bar)** |
|---|---|
| Pression haute cycle ORC 6 | 2,4 |
| Pression basse cycle ORC 6 | 0,45 |

Les puissances des échangeurs sont données dans le tableau 6 suivant :

**[Tableau 6]**

| **Puissances** | **Valeur (kw)** |
|---|---|
| Puissance condenseur ORC (61) | 600 |
| Puissance évaporateur ORC (63) | 550 |

Les puissances électriques sont données dans le tableau 7 suivant :

**[Tableau 7]**

| **Puissances électriques** | **Valeur (kw)** |
|---|---|
| Puissance pompe ORC (62) | 1,4 |
| Puissance pompe eau (8) | 0,6 |
| Puissance pompe eau (30) | 33 |
| Puissance turbine électrique (60) | 35 |

Ainsi, dans toutes ces conditions de fonctionnement, le volume des échangeurs à dimensionner est résumé dans le tableau 8 suivant :

**[Tableau 8]**

| **Volumes** | **Valeur** (m³) |
|---|---|
| Volume condenseur ORC (HFE7100/Eau) | 0,02 |
| Volume évaporateur ORC (HFE7100/Eau) | 3,66 |

Le diagramme T-s du cycle ORC et frigorifique est montré à la figure 6.

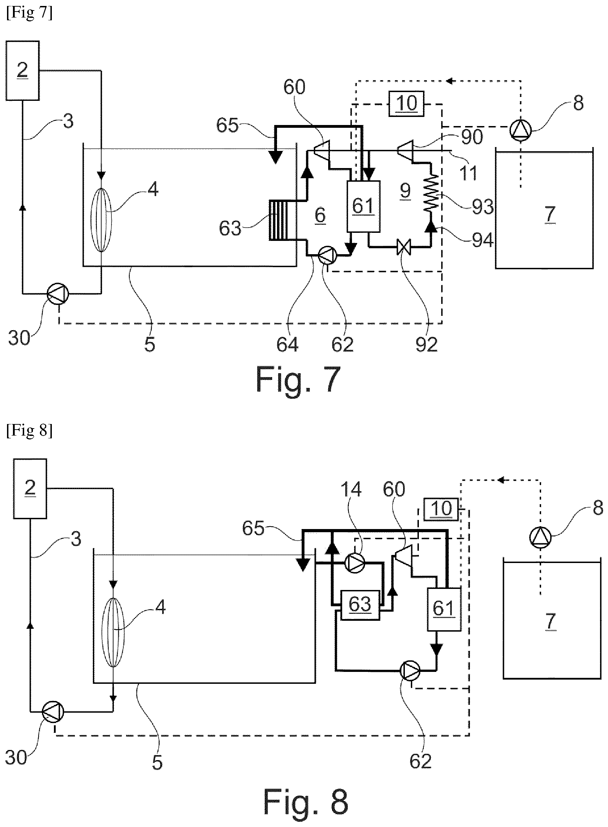

Une des variantes possibles de la configuration selon la figure 5 consiste à accoupler l'arbre 11 de la turbine 60 du cycle ORC 6 et l'arbre du compresseur du cycle frigorifique. Cette configuration montrée à la figure 7 permet de ne pas avoir besoin d'alimenter le compresseur du cycle frigorifique électriquement et permet ainsi d'économiser de l'énergie (conversions électromécaniques).

Une seconde variante du système consiste à mutualiser d'avantages de composants entre les cycles ORC et frigorifique : le fluide de travail, une partie de la tuyauterie, le condenseur 61 comme déjà illustré.

Une autre variante possible est de ne pas utiliser un évaporateur tubulaire immergé comme montré en figure 4 mais un évaporateur déporté par exemple de type à plaques. Pour ce faire, il est nécessaire d'acheminer l'eau de la réserve dans une conduite, via une pompe 14 comme montré en figure 8. Cette configuration permet une réduction du volume de l'échangeur chaud, une réduction des travaux d'implantation de l'échangeur sur la piscine ou encore la possibilité, comme dans la configuration précédente, de faire fonctionner l'ORC grâce à une source chaude annexe. Il est à noter qu'en renvoyant l'eau en sortie de l'évaporateur en la mélangeant à celle venant du condenseur ORC il n'est plus besoin que d'un seul piquage sur la piscine au lieu de deux dans les autres configurations et variantes.

L'invention n'est pas limitée aux exemples qui viennent d'être décrits ; on peut notamment combiner entre elles des caractéristiques des exemples illustrés au sein de variantes non illustrées.

D'autres variantes et modes de réalisation peuvent être envisagés sans pour autant sortir du cadre de l'invention.

Le système EPUR qui vient d'être décrit en relation avec un réacteur nucléaire à eau pressurisée peut tout-à-fait être mis en oeuvre dans un réacteur nucléaire à eau bouillante (REB).

De manière générale, l'invention s'applique à toute piscine 5 qui peut constituer la source froide destinée à refroidir un coeur de réacteur REP ou un coeur de réacteur REB ou à refroidir et/ou dépressuriser l'enceinte de confinement primaire d'un réacteur REP ou d'un réacteur REB.

Ainsi, si dans les exemples illustrés, le moyen d'évacuation de la puissance résiduelle issue du coeur du réacteur passe par le générateur de vapeur, ce moyen peut tout aussi bien être un condenseur implanté dans l'enceinte de confinement que ce soit pour un réacteur REP, ou pour un réacteur REB.

Par exemple pour un réacteur REP, on pourra se reporter à la configuration des panneaux condenseur d'ambiance du projet HPR1000 (« *Passive containment heat removal* ») ou à la publication [6] qui décrit un condenseur optimisé monté contre la paroi d'enceinte de confinement (« *Passive containment cooling system* »). Pour un réacteur REB, on pourra se reporter à la configuration du réacteur avancé KERENA des condenseurs de refroidissement (« *Containment cooling condensers* ») de l'enceinte.

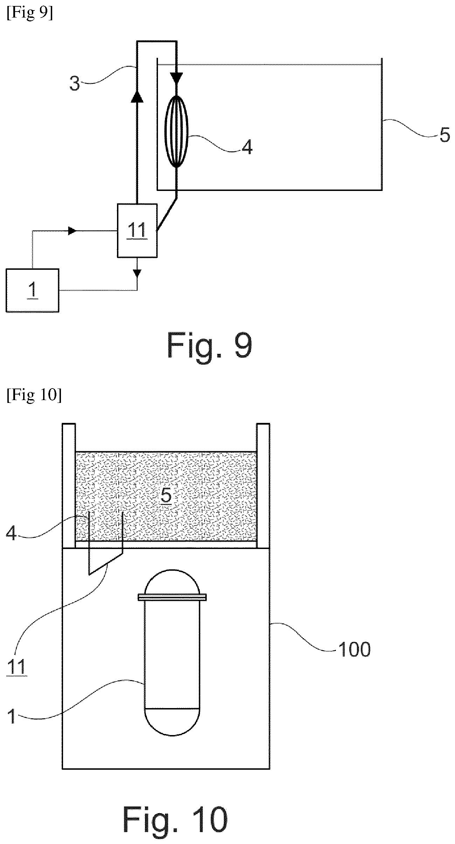

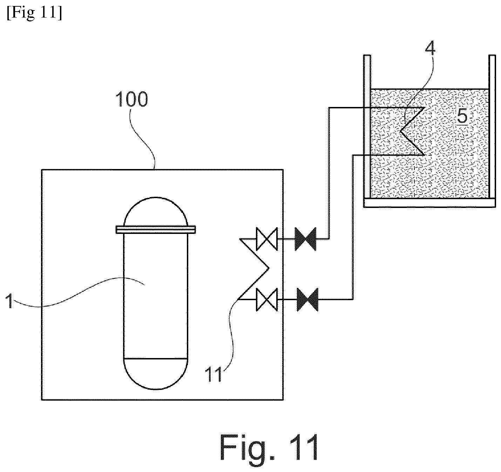

De manière plus générale, pour un REP ou un REB, le moyen d'évacuation de la puissance résiduelle issue du coeur du réacteur peut être un système de dépressurisation de la vapeur présente dans l'enceinte de confinement (figure 9), et le moyen d'échange thermique peut être un échangeur à eau 4 immergé dans la piscine 5 (configuration en boucle fermée de la figure 11, issue de la référence [6]) ou un prélèvement direct de l'eau de la piscine 5 (configuration en boucle fermée de la figure 10, issue de la référence [6])) d'une part, et d'un condenseur en paroi de confinement 11 (« *containment wall condenser* ») en contact direct avec la vapeur présente dans l'enceinte de confinement 100 du réacteur d'autre part.

La piscine 5 peut être la source d'alimentation d'une rampe d'aspersion d'un circuit d'aspersion dans l'enceinte (EAS) qui, en cas d'accident conduisant à une augmentation significative de la pression dans le bâtiment du réacteur, permet de faire décroître cette pression et de préserver ainsi l'intégrité de l'enceinte de confinement. Pour un réacteur REP, on pourra se reporter à la configuration de rampes d'aspersion interne à l'enceinte de confinement primaire du projet HPR 1000 ou externe à l'enceinte primaire du projet AP1000.

La piscine 5 peut être une piscine de surpression d'un réacteur REB, par exemple une piscine en acier de forme torique dans un réacteur de type Mark I, la vapeur d'eau issue accidentellement du coeur du réacteur est condensée.

La piscine 5 peut également être une piscine du circuit d'injection de sécurité d'un réacteur REP, comme celle du projet HPR-1000, d'acronyme IRWST (« In containment Refueling Water System Tank »).

### Liste des références citées

[1]: https://www-pub.iaea.org/MTCD/Publications/PDF/TE-1785_web.pdf.
[2]: S. Kadalev et al, 2014, Annals of Nuclear Energy, vol. 72, p. 182-188;
[3]: D.C. Sun, Y. Li, Z. Xi, Y.F. Zan, P.Z. Li, W.B. Zhuo, "Experimental évaluation of safety performance of emergency passive residual heat removal system in HPR1000", Nuclear Engineering and Design, Volume 318, 2017, Pages 54-60, ISSN 0029-5493, https://doi.org/10.1016/j.nucengdes.2017.04.003.
[4]: Mikhail Maltsev, 2015, "Additional information on modem VVER Gen III technology" https://www.oecd-nea.org/upload/docs/application/pdf/2020-07/ii-la-maltesev.pdf
[5]: David Hinds and Chris Maslak, "Next-generation nuclear energy: The ESBWR" Nuclear News. January 2006.
[6]: https://www-pub.iaea.org/MTCD/Publications/PDF/te_1624_web.pdf

## Revendications

1. Réacteur nucléaire à eau légère (REL), notamment un réacteur à eau pressurisée (REP) ou un réacteur à eau bouillante (REB), comprenant :
- un coeur de réacteur (1) ;
- un circuit de refroidissement comprenant un moyen d'échange thermique relié en boucle fermée à un moyen de prélèvement de vapeur du circuit primaire ou secondaire du réacteur et une première pompe (30) pour alimenter en eau le moyen de prélèvement du circuit primaire ou secondaire depuis le moyen d'échange thermique ;
- un système d'évacuation d'au moins une partie de la puissance résiduelle du coeur réacteur, le système comprenant :
une première réserve d'eau ou piscine (5), agencée au-dessous du générateur de vapeur, dans laquelle le moyen d'échange thermique est immergé de sorte que l'eau contenue dans cette dernière refroidisse la vapeur issue du moyen de prélèvement;
une machine (6) à cycle organique de Rankine (ORC) comprenant :
- un expandeur (60) ;
- un condenseur (61),
- une deuxième pompe (62) ;
- un évaporateur (63) agencé en contact avec la piscine de sorte que cette dernière constitue la source chaude de l'ORC ;
- un circuit fluidique (64) dans lequel circule en boucle fermée un fluide de travail, le circuit fluidique (64) reliant l'expandeur (60) au condenseur (61), le condenseur (61) à la deuxième pompe (62), la deuxième pompe (62) à l'évaporateur (63), et l'évaporateur (63) à l'expandeur (60);
une deuxième réserve d'eau (7), distincte de la piscine, et une troisième pompe (8) reliée à la deuxième réserve d'eau et au condenseur de l'ORC pour alimenter en eau ce dernier, en tant que source froide de l'ORC.

2. Réacteur nucléaire à eau pressurisée selon la revendication 1 comprenant un circuit de refroidissement comprenant un générateur de vapeur et un condenseur à eau immergé dans la piscine et relié en boucle fermée au générateur de vapeur.

3. Réacteur nucléaire à eau pressurisée selon la revendication 1, le moyen de prélèvement de la puissance résiduelle présente dans le circuit primaire étant un échangeur liquide/liquide, et le moyen d'échange thermique étant un échangeur à eau immergé dans la piscine, de sorte que l'eau contenue dans cette dernière refroidisse l'eau du circuit primaire circulant dans l'échangeur liquide/liquide.

4. Réacteur nucléaire à eau bouillante (REB) selon la revendication 1, comprenant un circuit de refroidissement comprenant :
- un prélèvement de vapeur primaire sur la ligne d'alimentation à la turbine du réacteur;
- un condenseur à eau immergé dans la piscine et relié en boucle fermée au prélèvement de vapeur.

5. Réacteur nucléaire à eau pressurisée (REP) ou à eau bouillante (REB), selon la revendication 1, le moyen d'évacuation de la puissance résiduelle issue du coeur du réacteur étant un système de dépressurisation de la vapeur présente dans l'enceinte de confinement et le moyen d'échange thermique étant un échangeur à eau (4) immergé dans la piscine ou un prélèvement direct de l'eau de la piscine (5) d'une part, et d'un condenseur en paroi de confinement (11) en contact direct avec la vapeur présente dans l'enceinte de confinement (100) du réacteur d'autre part.

6. Réacteur nucléaire selon l'une des revendications précédentes, la première réserve d'eau ou piscine étant agencée sur ou dans le sol.

7. Réacteur nucléaire selon l'une des revendications précédentes, la deuxième réserve d'eau étant agencée sur ou dans le sol.

8. Réacteur nucléaire selon l'une des revendications précédentes, l'évaporateur (63) étant immergé dans la piscine ou déporté de celle-ci.

9. Réacteur nucléaire selon la revendication 8, l'évaporateur immergé étant un échangeur tubulaire ou un échangeur à plaques.

10. Réacteur nucléaire selon l'une des revendications précédentes, comprenant en outre un cycle frigorifique (9) comprenant :
- un compresseur (90) ;
- un condenseur (61) reliée à la troisième pompe (8) pour alimenter en eau ce dernier ;
- un organe de détente (92) ;
- un évaporateur à air (93),
- un circuit fluidique (94) dans lequel circule en boucle fermée un fluide de travail, le circuit fluidique (94) reliant le compresseur (90) au condenseur (61), le condenseur (61) à l'organe de détente (62), l'organe de détente à l'évaporateur à air (93), et l'évaporateur à air (93) au compresseur (90).

11. Réacteur nucléaire selon la revendication 10, le condenseur (61) du cycle frigorifique étant le condenseur de l'ORC.

12. Réacteur nucléaire selon la revendication 10 ou 11, le fluide de travail du cycle frigorifique étant celui de l'ORC.

13. Réacteur nucléaire selon l'une des revendications 10 à 12, l'arbre (11) de l'expandeur ORC étant accouplé à l'arbre du compresseur du cycle frigorifique.

14. Réacteur nucléaire selon l'une des revendications précédentes, comprenant un injecteur agencé dans une partie basse du système et relié à la troisième pompe agencée dans une partie haute du système, l'injecteur étant adapté pour amorcer la troisième pompe.

15. Réacteur nucléaire selon l'une des revendications précédentes, comprenant des batteries (10) adaptées pour le démarrage électrique des pompes, des composants électriques de l'ORC et le cas échéant du cycle frigorifique.
